# EUROPÄISCHE PATENTSCHRIFT

(11) **EP 2 280 878 B1**
(45) Veröffentlichungstag und Bekanntmachung des Hinweises auf die Patenterteilung: **05.10.2011**
(21) Anmeldenummer: 09735664.6
(22) Anmeldetag: 01.04.2009
(51) Int. Cl.: B65B 43/46, B65G 29/00, B65G 47/84

(54) **VORRICHTUNG ZUM TRANSPORTIEREN EINES BEHÄLTERS**
DEVICE FOR TRANSPORTING A CONTAINER
DISPOSITIF POUR LE TRANSPORT D'UN CONTENANT

(30) Priorität: 21.04.2008 DE 102008001285
(43) Veröffentlichungstag der Anmeldung: 09.02.2011
(73) Patentinhaber: Robert Bosch GmbH, 70442 Stuttgart (DE)
(72) Erfinder: BLUMENSTOCK, Klaus, 74589 Satteldorf (DE); SIMON, Michael, 74564 Crailsheim (DE)
(86) Internationale Anmeldenummer: PCT/EP2009/053848
(87) Internationale Veröffentlichungsnummer: WO 2009/130111

(56) Entgegenhaltungen:
- EP-A- 0 629 569
- DE-A1- 2 224 691

## Beschreibung

### Stand der Technik

Die vorliegende Erfindung betrifft eine Vorrichtung und ein Verfahren zum Transportieren von Behältern.

Vorbekannt sind Verpackungsmaschinen zum Befüllen und Verschließen von Behältern (Flaschen, Vials, Ampullen, Spritzen usw.) mit sich drehenden Sternrädern, welche die Behälter in Ausfräsungen aufnehmen. Im getakteten Betrieb stoppt das Sternrad, um die Behälter zu Befüllen oder zu Verschließen. Eine Möglichkeit des Verschließens ist das Verbördeln von Aluminium-Kappen auf Behältern. Dabei werden die Behälter durch einen drehenden Teller in Rotation versetzt. Die für den einwandfreien Transport der Behälter erforderliche Führungsgenauigkeit bedingt Ausfräsungen, welche relativ eng an den Behältern anliegen. Die Behälter werden somit in Rotation versetzt während sie in den Ausfräsungen stecken. Dabei ergeben sich folgende Probleme: bei Kunststoffflaschen entstehen Kratzer am Umfang der Flaschen durch Kontakt der rotierenden Flaschen mit den Ausfräsungen des Sternrades. Bei Vials aus Hüttenglas kann es durch Unrundheit zur Beschädigung des Behälters bzw. zu schlechten Bördelergebnissen kommen, da die Behälter in den Ausfräsungen klemmen und somit nicht rotieren.
Die EP-A-0629569 offenbart zwar relativ zueinander drehbare obere und untere Aufnahmevorrichtungen mit oberen und unteren Taschen. Allerdings erfolgt die Verdrehung der Aufnahmevorrichtung lediglich zwecks Einstellung der Taschengröße, nicht aber um die Behälter zu klemmen oder freizustellen.

### Vorteile der Erfindung

Die erfindungsgemäße Vorrichtung mit den Merkmalen des Anspruchs 1 weist demgegenüber den Vorteil auf, dass ein Behälter sicher transportiert und an exakter Stelle freigestellt werden kann. Nach dem Freistellen des Behälters kann dieser frei rotieren und ist unbehindert von der erfindungsgemäßen Vorrichtung. Ferner ist die erfindungsgemäße Vorrichtung aufgrund eines einfachen Aufbaus kostengünstig herstellbar ist. Dies ermöglicht eine flexible und wirtschaftliche Herstellung der erfindungsgemäßen Vorrichtung für verschiedene Behälter. Des Weiteren ist die die erfindungsgemäße Vorrichtung als Modul gestaltet und bildet somit einen abgeschlossenen modularen Bestandteil einer Produktionskette. Diese Modularität erlaubt eine flexible Variierung der erfindungsgemäßen Vorrichtung ohne dabei die Produktionskette vor bzw. nach der Vorrichtung verändern zu müssen. Dies wird erfindungsgemäß erreicht durch eine Vorrichtung zum Transportieren eines Behälters umfassend eine drehbare obere Aufnahmevorrichtung, eine drehbare untere Aufnahmevorrichtung und wenigstens einen Antrieb. Dieser Antrieb kann die obere Aufnahmevorrichtung und die untere Aufnahmevorrichtung drehen. Die obere Aufnahmevorrichtung und die untere Aufnahmevorrichtung sind übereinander angeordnet. Ferner umfasst die obere Aufnahmevorrichtung zumindest eine obere Tasche mit einer ersten Breite und die untere Aufnahmevorrichtung zumindest eine untere Tasche mit einer zweiten Breite. Die obere Tasche und die untere Tasche können zusammen den Behälter aufnehmen, wobei die erste Breite und die zweite Breite jeweils größer sind als eine dritte Breite des Behälters. Somit können die obere Aufnahmevorrichtung und die untere Aufnahmevorrichtung durch relatives drehen zueinander den Behälter klemmen und wieder freizustellen.

Die Unteransprüche zeigen bevorzugte Weiterbildungen der Erfindung.

Eine bevorzugte Ausgestaltung der erfindungsgemäßen Vorrichtung sieht vor, dass die erste Breite der oberen Tasche gleich der zweiten Breite der unteren Tasche ist. Dies ermöglicht gleiche Bearbeitungsschritte bei der Herstellung der oberen Aufnahmevorrichtung und der unteren Aufnahmevorrichtung.

Ferner bevorzugt ist es, eine erste Dicke der oberen Aufnahmevorrichtung gleich einer zweiten Dicke der unteren Aufnahmevorrichtung zu gestellten. Dies ermöglicht eine weitere Kosteneinsparung bei der Herstellung der erfindungsgemäßen Vorrichtung durch Verwendung von Gleichteilen bzw. gleichen Bearbeitungsschritten.

Vorteilhaft ist es, eine Kontur der oberen Tasche und/oder eine Kontur der unteren Tasche teilweise an eine äußere Form des Behälters anzupassen. Dadurch wird ein flächiges Anliegen dies Behälters an der Kontur der oberen Tasche und/oder der Kontur der unteren Tasche erreicht. Die flächige Berührung, im Gegensatz zur linienförmigen oder punktförmigen Berührung, ermöglicht eine breit verteilte und somit schonende Kraftübertragung zwischen der oberen Tasche bzw. unteren Tasche und dem Behälter.

Ferner vorteilhaft ist eine obere Tasche und eine untere Tasche mit jeweils zumindest einem Freischnitt, an welchem der Behälter nicht an der Kontur der oberen Tasche und/oder der Kontur der unteren Tasche anliegt. Besonders bevorzugt sind diese Freischnitte an Innenseiten der Taschen, um das Freistellen des Behälters zu fördern. Unter Innenseiten versteht man eine, einem Mittelpunkt der erfindungsgemäßen Vorrichtung zugewandt Seite

Weiter vorteilhaft ist es, wenn die obere Aufnahmevorrichtung mehrere obere Taschen umfasst und die untere Aufnahmevorrichtung dementsprechend mehrere untere Taschen umfasst, damit die Vorrichtung gleichzeitig mehrere Behälter aufnehmen kann. Dies ermöglicht die Beschleunigung des gesamten Produktionsablaufes und die Anzahl der aufzunehmenden Behälter kann an die Taktung der Produktionskette angepasst werden.

Vorteilhaft ist es, den Antrieb der erfindungsgemäßen Vorrichtung mit zumindest einem Zahnriemenantrieb und/oder zumindest einem Elektromotor, Servomotor oder Schrittmotor auszustatten. Diese Anordnung erlaubt eine exakte Steuerung der oberen und unteren Aufnahmevorrichtungen bzgl. Drehwinkel, Drehgeschwindigkeit und Drehbeschleunigung.

Ferner ist es von Vorteil, für die obere Aufnahmevorrichtung einen separaten ersten Antrieb und für die untere Aufnahmevorrichtung einen separaten zweiten Antrieb vorzusehen. Dadurch könne die obere Aufnahmevorrichtung und die untere Aufnahmevorrichtung völlig unabhängig voneinander gedreht werden und die Kraft zum Klemmen kann frei variiert werden.

Weiterhin bevorzugt ist es, dass der erste Antrieb eine Welle, verbunden mit der oberen Aufnahmevorrichtung, umfasst und der zweite Antrieb eine Hohlwelle, verbunden mit der unteren Aufnahmevorrichtung, umfasst, wobei die Welle innerhalb der Hohlwelle verläuft. Somit kann sich der erste und der zweite Antrieb in selber Richtung von den Aufnahmevorrichtungen erstrecken (z.B. nach unten in einen Maschinentisch) und die obere Aufnahmevorrichtung, und die untere Aufnahmevorrichtung werden koaxial angetrieben. Dadurch sind vor- und nachgeschaltete Module der Produktionskette weitgehend ungestört vom Antrieb der erfindungsgemäßen Vorrichtung.

Ferner bevorzugt ist es, die obere Aufnahmevorrichtung als oberes Sternrad die untere Aufnahmevorrichtung als unteres Sternrad zu gestalten. Das Sternrad ist bekannt aus bestehenden Produktionsketten und erleichtert somit die Integration der erfindungsgemäßen Vorrichtung in bestehende Anlagen. Ferner ist das Sternrad als Frästeil in Metall und Kunststoff einfach und präzise herstellbar.

Weiterhin bevorzugt ist es, die erfindungsgemäße Vorrichtung in einer pharmazeutische Verschließanlage zum Verschließen von Behältern zu nutzen. Besonders beim Verbördeln der Behälter mit Aluminium-Kappen zeigt die Freistellfunktion der erfindungsgemäßen Vorrichtung seine vorteilhaften Eigenschaften. Da die Behälter (Flaschen, Vials, Ampullen, Spritzen usw.) nicht mehr verklemmen bzw. brechen können, ist eine Gefährdung von Mensch und Maschine durch pharmazeutische Substanzen ausgeschlossen.

Ferner umfasst die Erfindung ein Verfahren zum Transportieren eines Behälters mit den Merkmalen des Anspruchs 12. Dieses erfindungsgemäße Verfahren weist den Vorteil auf, dass es aufgrund eines einfachen und effizienten Ablaufs kostengünstig ausführbar ist. Dies ermöglicht eine flexible und wirtschaftliche Durchführung des Verfahrens für verschiedene Behälter. Ferner ist das Verfahren modularer Bestandteil in einer Kette von Produktionsabläufen. Diese Modularität erlaubt eine flexible Variierung des Verfahrens ohne dabei die Produktionsschritte vor bzw. nach dem erfindungsgemäßen Verfahren verändern zu müssen. Dies wird erfindungsgemäß durch die folgenden vier Schritte erreicht: In einem ersten Schritt wird der Behälter in eine obere Tasche und eine untere Tasche aufgenommen. Dies erfolgt mit einer drehbaren oberen Aufnahmevorrichtung umfassend eine obere Tasche mit einer ersten Breite, und einer drehbaren unteren Aufnahmevorrichtung umfassend eine untere Tasche mit einer zweiten Breite. Dabei ist die erste Breite und die zweite Breite jeweils größer als eine dritte Breite des Behälters. Der Behälter befindet sich somit gleichzeitig in der oberen und unteren Tasche. In einem zweiten Schritt wird der Behälter durch Verdrehen der oberen Aufnahmevorrichtung und der unteren Aufnahmevorrichtung relativ zueinander geklemmt. Daraufhin erfolgt in einem dritten Schritt das Transportieren des Behälters mittels synchronem Drehen der oberen Aufnahmevorrichtung und der unteren Aufnahmevorrichtung. In einem vierten Schritt wird der Behälter freigestellt. Dieses Freistellen des Behälters erfolgt durch ein zweites Verdrehen der oberen Aufnahmevorrichtung und der unteren Aufnahmevorrichtung relativ zueinander, wobei die relative Drehrichtung beim Klemmen entgegengesetzt der relativen Drehrichtung beim Freistellen ist. D.h., dass der Behälter in Freistellstellung in der oberen und unteren Tasche angeordnet ist, jedoch etwas Spiel hat, da die Breiten der Taschen größer sind als die Breite des Behälters. Zum Transportieren können die beiden Taschen gegeneinander verschoben werden und klemmen somit den Behälter ein. Dadurch können sich die obere und untere Aufnahmevorrichtung mit eingeklemmtem Behälter synchron drehen und somit den Behälter transportieren.

### Kurze Beschreibung der Zeichnung

Nachfolgend wird ein Ausführungsbeispiel der Erfindung unter Bezugnahme auf die begleitende Zeichnung beschrieben. In der Zeichnung ist:
- Figur 1: eine perspektivische Darstellung der erfindungsgemäßen Vorrichtung zum Transportieren eines Behälters gemäß einem Ausführungsbeispiel der Erfindung,
- Figur 2: ein Detailausschnitt einer oberen und unteren Aufnahmevorrichtung gemäß dem Ausführungsbeispiel der Erfindung,
- Figur 3: eine teilweise geschnittene Ansicht der oberen und unteren Aufnahmevorrichtung von unten in einer Transportstellung gemäß dem Ausführungsbeispiel der Erfindung,
- Figur 4: eine teilweise geschnittene Ansicht der oberen und unteren Aufnahmevorrichtung von unten in einer Freistellstellung gemäß dem Ausführungsbeispiel der Erfindung, und
- Figur 5: eine schematische Darstellung der Draufsicht auf eine pharmazeutische Verschließanlage gemäß dem Ausführungsbeispiel der Erfindung.

### Bevorzugte Ausführungsform der Erfindung

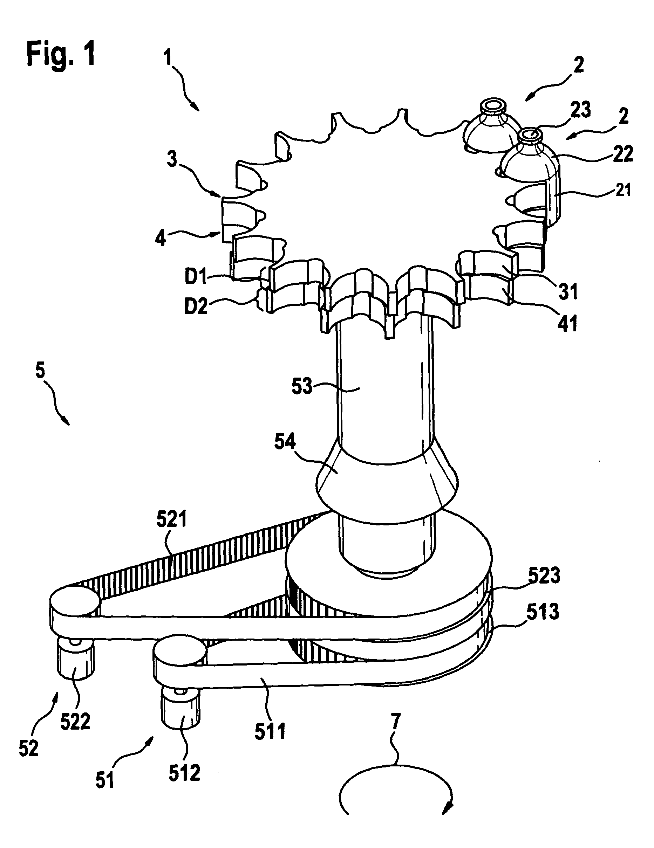

Nachfolgend wird unter Bezugnahme auf die Figuren 1 bis 5 eine Vorrichtung 1 zum Transport von Behältern 2 gemäß einem bevorzugtem Ausführungsbeispiel der Erfindung im Detail beschrieben. Die Vorrichtung 1 des Ausführungsbeispiels kommt innerhalb einer pharmazeutischen Verschließanlage 6 zum Einsatz.

Figur 1 zeigt die erfindungsgemäße Vorrichtung 1 mit einer oberen Aufnahmevorrichtung und einer unteren Aufnahmevorrichtung. Die Aufnahmevorrichtungen sind in diesem Ausführungsbeispiel als Sternräder ausgeführt und werden deshalb als oberes Sternrad 3 und unteres Sternrad 4 bezeichnet. Ferner sind zwei Behälter 2 in einer oberen Tasche 31 und einer unteren Tasche 41 zu sehen. Unterhalb der beiden Sternräder 3, 4 erstreckt sich eine Ummantelung 53 mit einer Manschette 54. Des weiteren ist ein erster Antrieb 51 und ein zweiter Antrieb 52 zu sehen. Ferner ist ein Pfeil 7 dargestellt, welcher eine Drehrichtung der erfindungsgemäßen Vorrichtung 1 vorgibt.

Die Behälter 2 setzen sich jeweils aus einem zylindrischen Behälterkörper 21, einer Verjüngung 22 und einer Öffnung 23 zusammen.

Das obere Sternrad 3 weist fünfzehn obere Taschen 31 auf, welche in ihrer Form fünfzehn unteren Taschen 41 des unteren Sternrades 4 entsprechen. Des Weiteren ist die Form bzw. Kontur der oberen Taschen 31 und der unteren Taschen 41 an den zylindrischen Behälterkörper 21 angepasst. Das obere Sternrad 3 und somit auch die obere Tasche 31 haben eine erste Dicke D1 und das unteres Sternrad 4 entsprechend eine zweite Dicke D2. Im vorliegenden Ausführungsbeispiel ist die erste Dicke D 1 gleich der zweiten Dicke D2. Eine Höhe des zylindrischen Behälterkörpers 21 entspricht in etwa der Summe aus der erste Dicke D1 und der zweiten Dicke D2. Des Weiteren entspricht die Summe aus der ersten Dicke D1 und der zweiten Dicke D2 einer Dicke eines herkömmlichen Sternrades nach Stand der Technik.

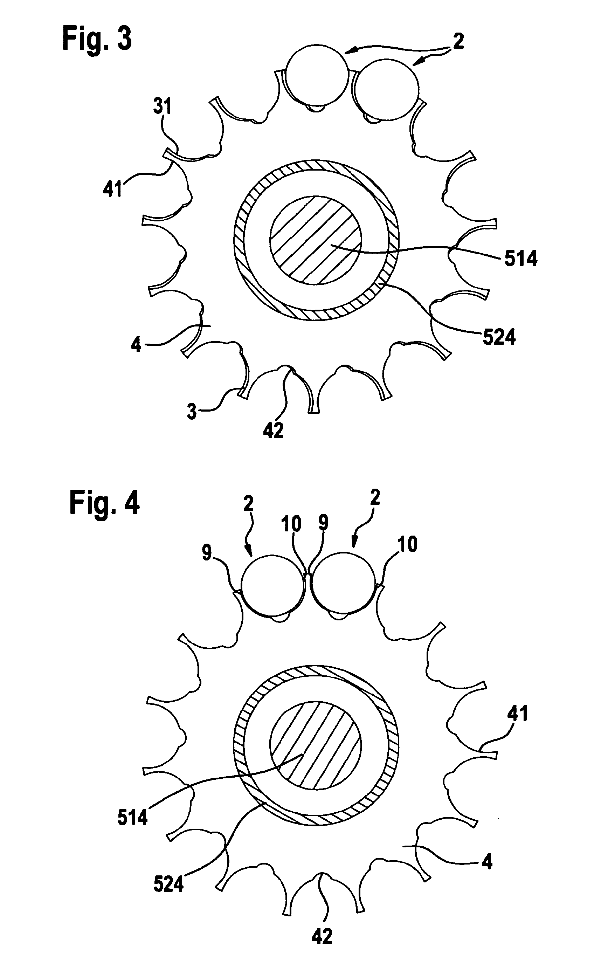

Unterhalb des unteren Sternrades 4 befindet sich die Ummantelung 35, welche eine Hohlwelle 524 und eine Welle 514 verdeckt. Die Hohlwelle 524 und die Welle 514 sind somit in Figur 1 nicht zu sehen, sind jedoch in den Figuren 3, 4 dargestellt. Auf dieser Ummantelung 35 steckt die Manschette 54. Bei Einbau der erfindungsgemäßen Vorrichtung 1 in einen Maschinentisch, erstrecken sich die Hohlwelle 524, die Welle 514 und die Ummantelung 35 durch eine Ausnehmung durch den Maschinentisch hindurch. Die Manschette 54 sitzt in diesem Falle über der Ausnehmung.

Der erste Antrieb 51 umfasst einen ersten Elektromotor 512, einen ersten Zahnriemen 511 und ein erstes Zahnriemenrad 513. Dieses erste Zahnriemenrad 513 ist mit der Welle 514 drehfest verbunden. Diese Welle 514 wiederum ist mit dem oberen Sternrad 3 drehfest verbunden. Somit treibt der erste Elektromotor 512 über den ersten Zahnriemen 511 das obere Sternrad 3 an. In selbiger Weise funktioniert der zweite Antrieb 52 zum Antreiben des unteren Sternrades 4. Mit dem zweiten Elektromotor 522, dem zweiten Zahnriemen 521 und dem zweiten Zahnriemenrad 523 wird die Hohlwelle 524 angetrieben. Diese Hohlwelle 524 ist wiederum mit dem unteren Sternrad 4 drehfest verbunden. Da das obere Sternrad 3 und das unteres Sternrad 4 koaxial gedreht werden, verläuft die Welle 514 innerhalb der Hohlwelle 524. Die Welle 514 bzw. die Hohlwelle 524 sind mittels mechanischen Spannvorrichtungen mit dem ersten Zahnriemenrad 513 bzw. dem zweiten Zahnriemenrad 523 verbunden.

Der erste Antrieb 51 und der zweite Antrieb 52 können somit das obere Sternrad 3 und das untere Sternrad 4 jeweils unabhängig in beide Richtungen drehen. Die Verwendung präziser Zahnriemen erlaubt eine exakte Steuerung von Drehwinkel, Drehgeschwindigkeit und Drehbeschleunigung des oberen Sternrades 3 und des unteren Sternrades 4.

Dieser soeben beschriebene Aufbau der erfindungsgemäßen Vorrichtung 1, ermöglicht eine Transport- bzw. Klemmstellung, eine Freistellstellung und eine Aufnahmestellung der Vorrichtung 1 wie folgt:

In einem ersten Schritt, wird die obere Tasche 31 deckungsgleich mit der unteren Tasche 41 gestellt. Dadurch ist die erfindungsgemäße Vorrichtung 1 in einem Aufnahmezustand und kann die beiden Behälter 2 aufnehmen. Sobald sich die beiden Behälter 2 innerhalb der oberen Taschen 31 und der unteren Taschen 41 befinden wird das untere Sternrad 4 in Richtung des Pfeils 7 um 1° gedreht. Gleichzeitig wird das obere Sternrad 3 entgegen der Pfeilrichtung 7 um 1° verdreht. Somit klemmen die beiden Behälter 2 innerhalb der erfindungsgemäßen Vorrichtung 1 und können transportiert werden. Zum Transport drehen sich das oberes Sternrad 3 und das untere Sternrad 4 synchron in Pfeilrichtung 7. Sobald die beiden Behälter 2 an einer nächsten Bearbeitungsstation angekommen sind, wird die Klemmung aufgehoben und die Behälter 2 werden freigestellt. Die relative Verdrehung es oberen Sternrades 3 gegenüber dem unteren Sternrad 4 von 2° wird somit zum Freistellen wieder zurückgedreht.

Da die Höhe des zylindrischen Behälterkörpers 21 der Summe aus der erste Dicke D1 und der zweiten Dicke D2 entspricht, können, durch verdrehen des oberen Sternrades 3 relativ zum unteren Sternrad 4, die Behälter 2 an ihrem zylindrischen Behälterkörper 21 formschlüssig geklemmt werden. Das Klemmen bzw. Greifen der Behälter 2 am zylindrischen Behälterkörper 21 ermöglicht eine große, flächige Verteilung der angreifenden Kraft. Um ein Kippen der Behälter 2 beim Klemmen zu vermeiden, ist das obere Sternrad 3 mit minimalem Spiel über dem unteren Sternrad 4 angeordnet.

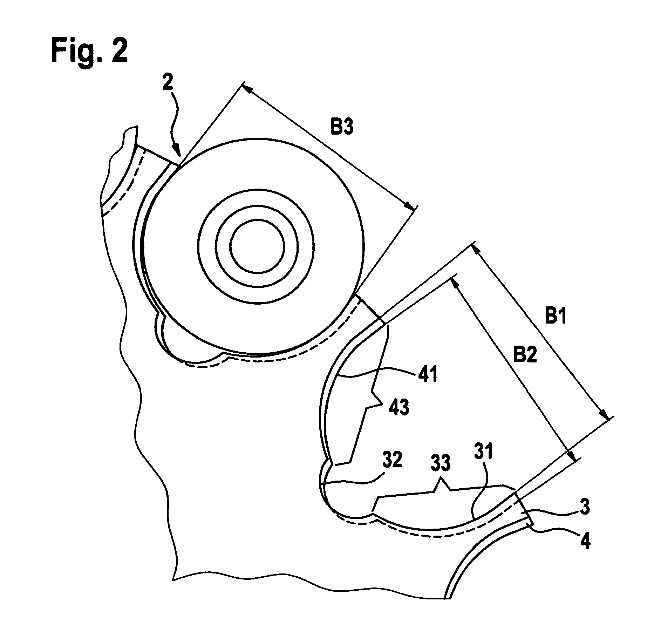

Figur 2 zeigt einen Detailausschnitt der erfindungsgemäßen Vorrichtung 1 nach dem Ausführungsbeispiel. Zu sehen ist die obere Tasche 31 mit der oberen Anlagefläche 33 und die untere Tasche 41 mit der unteren Anlagefläche 43. Die obere Tasche 31 weist einen oberen Freischnitt 32 und die untere Tasche 41 einen unteren Freischnitt 42 auf (siehe Figuren 3 und 4). Da der obere Freischnitt 32 und der untere Freischnitt 42 annähernd deckungsgleich sind, ist in Figur 2 lediglich der oberen Freischnitt 32 zu sehen. Die obere Tasche 31 hat eine erste Breite B1, welche in diesem Ausführungsbeispiel einer zweiten Breite B2 der unteren Tasche 41 entspricht. Der dargestellte Behälter 2 weist an seinem zylindrischen Behälterkörper 21 eine dritte Breite B3 auf. Die erste Breite B1 ist gleich der zweiten Breite B2 und die dritte Breite B3 ist kleiner als die erste Breite B 1 bzw. die zweiten Breite B2.

Die obere Anlagefläche 33 und die untere Anlagefläche 43 dienen zum formschlüssigen Klemmen des Behälters 2 während des Transportvorgangs. Da die dritte Breite B3 kleiner der ersten Breite B1 bzw. zweiten Breite B2 ist, kann der Behälter 2 innerhalb der oberen Tasche 31 und der unteren Tasche 41 freigestellt werden. Der obere Freischnitt 32 sowie der untere Freischnitt 42 begünstigen das Freistellen, da dort ein Kontakt des Behälters 2 mit der oberen Tasche 31 bzw. der unteren Tasche 41 verhindert wird.

Die Figuren 3 und 4 zeigen die erfindungsgemäße Vorrichtung 1 von unten. Dadurch ist die Welle 514 und die Hohlwelle 524 zu sehen. Die Funktionen der Welle 514 und der Hohlwelle 524 wurden bereits im Zusammenhang mit Figur 1 beschrieben. Ferner ist in beiden Figuren der untere Freischnitt 42 zu sehen. Die Funktion des unteren Freischnitts 42 entspricht der Funktion des oberen Freischnitts 32, welche bereits beschrieben wurde.

Figur 3 zeigt die erfindungsgemäße Vorrichtung 1 im Klemmzustand bzw. Transportzustand. Figur 4 zeigt die erfindungsgemäße Vorrichtung 1 im Freistellzustand bzw. Aufnahmezustand. Somit ist in Figur 3 zu sehen, wie die beiden Behälter 2 zwischen der oberen Tasche 31 und der unteren Tasche 41 eingeklemmt sind. Figur 4 hingegen zeigt die obere Tasche 31 und die untere Tasche 41 deckungsgleich. Somit sind in Figur 4 die beiden Behälter 2 freigestellt und zwischen der oberen Tasche 31 bzw. der unteren Tasche 41 und den beiden Behältern 2 ist jeweils ein linker Spalt 9 und ein rechter Spalt 10 zu sehen.

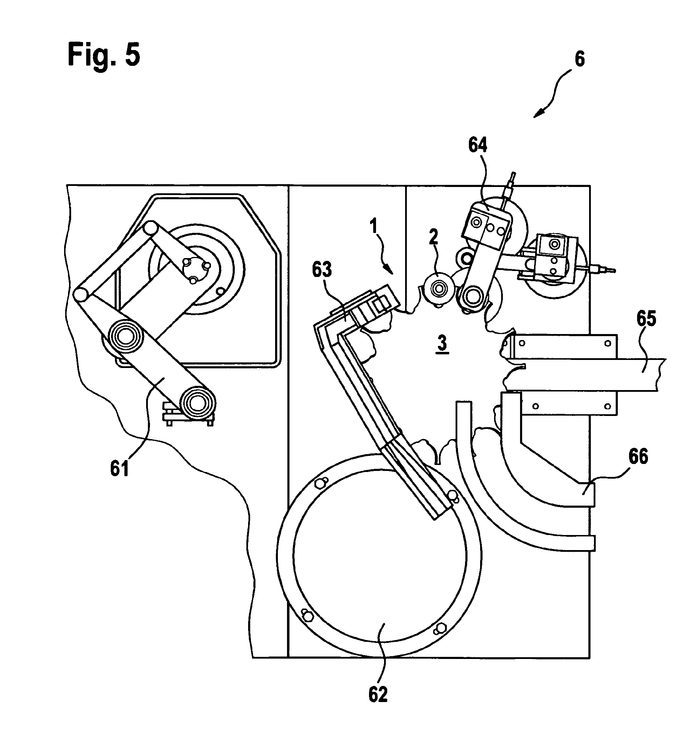

Figur 5 zeigt die erfindungsgemäße Vorrichtung 1 integriert in eine pharmazeutische Verschließanlage 6. Diese pharmazeutische Verschließanlage 6 dient zum Verbördeln von Behältern 2 mit Aluminium-Kappen. Neben der erfindungsgemäßen Vorrichtung 1 umfasst die pharmazeutische Verschließanlage 6 eine Zufuhreinheit 61, eine Sortiervorrichtung 62 mit einem Zubringer 63, eine Bördelmaschine 64 sowie Führungsschienen 66 und ein Förderband 65.

Die Zufuhreinheit 61 ist ausgelegt um zwei gefüllte Behälter 2 gleichzeitig in die erfindungsgemäße Vorrichtung 1 einzusetzen. Dabei befindet sich die erfindungsgemäße Vorrichtung 1 in einem Aufnahmezustand, d.h. die obere Tasche 31 ist deckungsgleich mit der unteren Tasche 41. Nach Einsetzen der beiden Behälter 2 in das obere Sternrad 3 und das untere Sternad 4 wird das obere Sternrad 3 gegenüber dem unteren Sternrad 4 um 2° verdreht. Dadurch klemmen die beiden Behälter 2 in der erfindungsgemäßen Vorrichtung 1 und können transportiert werden. Während des Transports setzt der Zubringer 63 Aluminium-Kappen auf die Öffnungen 23 der Behälter 2. Dazu fördert der Zubringer 63 Aluminium-Kappen aus der Sortiervorrichtung 62. Diese Aluminium-Kappen müssen in einem nächsten Schritt verbördelt werden. Dazu werden die Behälter 2 bis zur Bördelmaschine 64 transportiert. An der Bördelmaschine 64 müssen die Behälter 2 auf Drehtellern abgestellt werden. Die formschlüssige Klemmung der Behälter 2 und der präzise Antrieb mittels Zahnriemen erlaubt eine exaktes Absetzen der Behälter 2 auf diesen Drehtellern. Da nun die Behälter 2 frei rotieren müssen, wird die Klemmung aufgehoben und die erfindungsgemäße Vorrichtung 1 befindet sich im Freistellzustand. Nach dem Verbördeln der Behälter 2 wird das obere Sternrad 3 wieder gegen das untere Sternrad 4 verdreht und die Behälter 2 können weiter transportiert werden. Nach synchronem Drehen des oberen Sternrades 3 und des unteren Sternrades 4 können die Behälter 2 aus der pharmazeutischen Verschließanlage 6 abgegeben werden. Dies geschieht alternativ an dem Förderband 65 oder über die Führungsschienen 66.

Die erfindungsgemäße Vorrichtung 1 und das erfindungsgemäße Verfahren ermöglichen somit, im Gegensatz zum Stand der Technik, dass die Behälter 2 sicher transportiert und an exakter Stelle freigestellt werden können. Dies ermöglicht eine sichere und wirtschaftliche Weiterbearbeitung, z.B. Verbördeln, der Behälter 2 ohne diese zu verkratzen oder zu beschädigen.

## Patentansprüche

1. Vorrichtung (1) zum Transportieren eines Behälters (2) umfassend eine drehbare obere Aufnahmevorrichtung (3),
eine drehbare untere Aufnahmevorrichtung (4) und
wenigstens einen Antrieb (5), welcher die obere Aufnahmevorrichtung (3) und die untere Aufnahmevorrichtung (4) dreht,
wobei die obere Aufnahmevorrichtung (3) über der unteren Aufnahmevorrichtung (4) angeordnet ist,
wobei die obere Aufnahmevorrichtung (3) zumindest eine obere Tasche (31) mit einer ersten Breite (B1) umfasst und die untere Aufnahmevorrichtung (4) zumindest eine untere Tasche (41) mit einer zweiten Breite (B3) umfasst,
wobei die obere Tasche (31) und die untere Tasche (32) zusammen den Behälter (2) aufnehmen können,
wobei die erste Breite (B1) und die zweite Breite (B2) jeweils größer sind als eine dritte Breite (B3) des Behälters (2), und
wobei die obere Aufnahmevorrichtung (3) und die untere Aufnahmevorrichtung (4) relativ zueinander drehbar angeordnet sind, um den Behälter (2) zu klemmen oder freizustellen.

2. Vorrichtung nach einem der vorhergehenden Ansprüche, **dadurch gekennzeichnet, dass** die erste Breite (B1) der oberen Tasche (31) gleich der zweiten Breite (B2) der unteren Tasche (42) ist.

3. Vorrichtung nach einem der vorhergehenden Ansprüche, **dadurch gekennzeichnet, dass** eine erste Dicke (D1) der oberen Aufnahmevorrichtung (3) gleich einer zweiten Dicke (D2) der unteren Aufnahmevorrichtung (4) ist.

4. Vorrichtung nach einem der vorhergehenden Ansprüche, **dadurch gekennzeichnet, dass** eine Kontur der oberen Tasche (31) und/oder eine Kontur der unteren Tasche (41) teilweise einer äußeren Form des Behälters (2) entsprechen, um flächiges Anliegen des Behälters (2) an der Kontur der oberen Tasche (31) und/oder der Kontur der unteren Tasche (41) zu gewährleisten.

5. Vorrichtung nach Anspruch 4, **dadurch gekennzeichnet, dass** die obere Tasche (31) und die untere Tasche (41) jeweils zumindest einen Freischnitt (32, 42) umfassen, an welchem der Behälter (2) nicht an der Kontur der oberen Tasche (31) und/oder der Kontur der unteren Tasche (41) anliegt .

6. Vorrichtung nach einem der vorhergehenden Ansprüche, **dadurch gekennzeichnet, dass** die obere Aufnahmevorrichtung (3) mehrere obere Taschen (31) umfasst und die untere Aufnahmevorrichtung (4) dementsprechend mehrere untere Taschen (41) umfasst, damit die Vorrichtung (1) gleichzeitig mehrere Behälter (2) aufnehmen kann.

7. Vorrichtung nach einem der vorhergehenden Ansprüche, **dadurch gekennzeichnet, dass** der Antrieb (5) zumindest einen Zahnriemenantrieb (511, 521) und/oder zumindest einen Elektromotor (512, 522) umfasst.

8. Vorrichtung nach einem der vorhergehenden Ansprüche, **dadurch gekennzeichnet, dass** der Antrieb (5)
einen ersten Antrieb (51) für die obere Aufnahmevorrichtung (3), und
einen zweiten Antrieb (52) für die untere Aufnahmevorrichtung (4) umfasst.

9. Vorrichtung nach Anspruch 8, **dadurch gekennzeichnet, dass** der erste Antrieb (51) eine Welle (514), verbunden mit der oberen Aufnahmevorrichtung (3), umfasst und
der zweite Antrieb (52) eine Hohlwelle (524), verbunden mit der unteren Aufnahmevorrichtung (4), umfasst,
wobei die Welle (514) innerhalb der Hohlwelle (524) verläuft.

10. Vorrichtung nach einem der vorhergehenden Ansprüche, **dadurch gekennzeichnet, dass** die obere Aufnahmevorrichtung (3) ein oberes Sternrad umfasst und die untere Aufnahmevorrichtung (4) ein unteres Sternrad umfasst.

11. Pharmazeutische Verschließanlage (6) zum Verschließen, insbesondere Verbördeln, von Behältern (2) umfassend eine Vorrichtung (1) nach einem der vorhergehenden Ansprüche.

12. Verfahren zum Transportieren eines Behälters (2) mit
einer drehbaren oberen Aufnahmevorrichtung (3) umfassend eine obere Tasche (31) mit einer ersten Breite (B1), und einer drehbaren unteren Aufnahmevorrichtung (4) umfassend eine untere Tasche (31) mit einer zweiten Breite (B2), wobei die erste Breite (B1) und die zweite Breite (B2) jeweils größer sind als eine dritte Breite (B3) des Behälters (2),
umfassend die Schritte:
- Aufnahme des Behälters (2) in die obere Tasche (31) und die untere Tasche (41),
- Klemmen des Behälters (2) durch ein erstes Verdrehen der oberen Aufnahmevorrichtung (3) und der unteren Aufnahmevorrichtung (4) relativ zueinander,
- Transportieren des Behälters (2) mittels synchronem Drehen der oberen Aufnahmevorrichtung (3) und der unteren Aufnahmevorrichtung (4), und
- Freistellen des Behälters (2) durch ein zweites Verdrehen der oberen Aufnahmevorrichtung (3) und der unteren Aufnahmevorrichtung (4) relativ zueinander,
wobei die relative Drehrichtung beim Klemmen entgegengesetzt der relativen Drehrichtung beim Freistellen ist.

## Claims

1. Arrangement (1) for transporting a container (2), comprising
a rotatable upper receiving arrangement (3),
a rotatable lower receiving arrangement (4), and
at least one drive (5), which rotates the upper receiving arrangement (3) and the lower receiving arrangement (4),
wherein the upper receiving arrangement (3) is arranged above the lower receiving arrangement (4),
wherein the upper receiving arrangement (3) comprises at least one upper pocket (31) of a first width (B1) and the lower receiving arrangement (4) comprises at least one lower pocket (41) of a second width (B2), wherein the upper pocket (31) and the lower pocket (41) together can receive the container (2),
wherein the first width (B1) and the second width (B2) are each greater than a third width (B3) of the container (2), and
wherein the upper receiving arrangement (3) and the lower receiving arrangement (4) can be rotated relative to one another in order to clamp or release the container (2).

2. Arrangement according to Claim 1, **characterized in that** the first width (B1) of the upper pocket (31) is equal to the second width (B2) of the lower pocket (41).

3. Arrangement according to one of the preceding claims, **characterized in that** a first thickness (D1) of the upper receiving arrangement (3) is equal to a second thickness (D2) of the lower receiving arrangement (4).

4. Arrangement according to one of the preceding claims, **characterized in that** a contour of the upper pocket (31) and/or a contour of the lower pocket (41) correspond/corresponds, in part, to an outer shape of the container (2), in order to ensure that the container (2) butts with surface contact against the contour of the upper pocket (31) and/or the contour of the lower pocket (41).

5. Arrangement according to Claim 4, **characterized in that** the upper pocket (31) and the lower pocket (41) each comprise at least one cutout (32, 42), at which the container (2) does not butt against the contour of the upper pocket (31) and/or the contour of the lower pocket (41).

6. Arrangement according to one of the preceding claims, **characterized in that** the upper receiving arrangement (3) comprises a plurality of upper pockets (31) and the lower receiving arrangement (4), correspondingly, comprises a plurality of lower pockets (41), in order that the arrangement (1) can receive a plurality of containers (2) at the same time.

7. Arrangement according to one of the preceding claims, **characterized in that** the drive (5) comprises at least one toothed-belt drive (511, 521) and/or at least one electric motor (512, 522).

8. Arrangement according to one of the preceding claims, **characterized in that** the drive (5) comprises a first drive (51) for the upper receiving arrangement (3) and
a second drive (52) for the lower receiving arrangement (4).

9. Arrangement according to Claim 8, **characterized in that**
the first drive (51) comprises a shaft (514), connected to the upper receiving arrangement (3), and
the second drive (52) comprises a hollow shaft (524), connected to the lower receiving arrangement (4), wherein the shaft (514) runs within the hollow shaft (524).

10. Arrangement according to one of the preceding claims, **characterized in that** the upper receiving arrangement (3) comprises an upper star wheel and the lower receiving arrangement (4) comprises a lower star wheel.

11. Pharmaceutical closing installation (6) for closing, in particular flanging, containers (2), comprising an arrangement (1) according to one of the preceding claims.

12. Method of transporting a container (2) with a rotatable upper receiving arrangement (3) comprising an upper pocket (31) of a first width (B1), and with a rotatable lower receiving arrangement (4) comprising a lower pocket (41) of a second width (B2), wherein the first width (B1) and the second width (B2) are each greater than a third width (B3) of the container (2), comprising the following steps:
- receiving the container (2) in the upper pocket (31) and the lower pocket (41),
- clamping the container (2) by virtue of a first rotation of the upper receiving arrangement (3) and of the lower receiving arrangement (4) relative to one another,
- transporting the container (2) by means of synchronous rotation of the upper receiving arrangement (3) and of the lower receiving arrangement (4), and
- releasing the container (2) by virtue of a second rotation of the upper receiving arrangement (3) and of the lower receiving arrangement (4) relative to one another,
wherein the direction of relative rotation for the clamping operation is counter to the direction of relative rotation for the release operation.

## Revendications

1. Dispositif (1) pour transporter un récipient (2) comprenant un dispositif de réception supérieur rotatif (3),
un dispositif de réception inférieur rotatif (4) et
au moins un entraînement (5), qui fait tourner le dispositif de réception supérieur (3) et le dispositif de réception inférieur (4),
le dispositif de réception supérieur (3) étant disposé au-dessus du dispositif de réception inférieur (4),
le dispositif de réception supérieur (3) comprenant au moins une poche supérieure (31) d'une première largeur (B1) et le dispositif de réception inférieur (4) comprenant au moins une poche inférieure (41) d'une deuxième largeur (B2),
la poche supérieure (31) et la poche inférieure (41) pouvant réceptionner ensemble le récipient (2),
la première largeur (B1) et la deuxième largeur (B2) étant chacune supérieures à une troisième largeur (B3) du récipient (2) et
le dispositif de réception supérieur (3) et le dispositif de réception inférieur (4) étant disposés de manière à être rotatifs l'un par rapport à l'autre, pour serrer ou libérer le récipient (2).

2. Dispositif selon la revendication 1, **caractérisé en ce que** la première largeur (B1) de la poche supérieure (31) est égale à la deuxième largeur (B2) de la poche inférieure (41).

3. Dispositif selon l'une quelconque des revendications précédentes, **caractérisé en ce qu'**une première épaisseur (D1) du dispositif de réception supérieur (3) est égale à une deuxième épaisseur (D2) du dispositif de réception inférieur (4).

4. Dispositif selon l'une quelconque des revendications précédentes, **caractérisé en ce qu'**un contour de la poche supérieure (31) et/ou un contour de la poche inférieure (41) correspondent en partie à une forme extérieure du récipient (2), pour assurer une application à grande surface du récipient (2) sur le contour de la poche supérieure (31) et/ou sur le contour de la poche inférieure (41).

5. Dispositif selon la revendication 4, **caractérisé en ce que** la poche supérieure (31) et la poche inférieure (41) comprennent chacune au moins une découpe libre (32, 42) sur laquelle le récipient (2) ne s'applique pas sur le contour de la poche supérieure (31) et/ou sur le contour de la poche inférieure (41).

6. Dispositif selon l'une quelconque des revendications précédentes, **caractérisé en ce que** le dispositif de réception supérieur (3) comprend plusieurs poches supérieures (31) et, en conséquence de quoi, le dispositif de réception inférieur (4) comprend plusieurs poches inférieures (41) pour que le dispositif (1) puisse réceptionner simultanément plusieurs récipients (2).

7. Dispositif selon l'une quelconque des revendications précédentes, **caractérisé en ce que** l'entraînement (5) comprend au moins un entraînement par courroie dentée (511, 521) et/ou au moins un moteur électrique (512, 522).

8. Dispositif selon l'une quelconque des revendications précédentes, **caractérisé en ce que** l'entraînement (5) comprend
un premier entraînement (51) pour le dispositif de réception supérieur (3) et
un deuxième entraînement (52) pour le dispositif de réception inférieur (4).

9. Dispositif selon la revendication 8, **caractérisé en ce que**
le premier entraînement (51) comprend un arbre (514), relié avec le dispositif de réception supérieur (3), et
le deuxième entraînement (52) comprend un arbre creux (524), relié avec le dispositif de réception inférieur (4),
l'arbre (514) s'étendant à l'intérieur de l'arbre creux (524).

10. Dispositif selon l'une quelconque des revendications précédentes, **caractérisé en ce que** le dispositif de réception supérieur (3) comprend une roue étoile supérieure et le dispositif de réception inférieur (4) comprend une roue étoile inférieure.

11. Installation de fermeture pharmaceutique (6) pour fermer, notamment pour border, des récipients (2), comprenant un dispositif (1) selon l'une quelconque des revendications précédentes.

12. Procédé pour transporter un récipient (2) avec
un dispositif de réception supérieur rotatif (3) comprenant une poche supérieure (31) d'une première largeur (B1) et un dispositif de réception inférieur rotatif (4) comprenant une poche inférieure (41) d'une deuxième largeur (B2), la première largeur (B1) et la deuxième largeur (B2) étant chacune supérieures à une troisième largeur (B3) du récipient (2), comprenant les étapes de:
- réception du récipient (2) dans la poche supérieure (31) et la poche inférieure (41),
- serrage du récipient (2) par une première rotation du dispositif de réception supérieur (3) et du dispositif de réception inférieur (4) l'un par rapport à l'autre,
- transport du récipient (2) par rotation synchrone du dispositif de réception supérieur (3) et du dispositif de réception inférieur (4) et
- libération du récipient (2) par une deuxième rotation du dispositif de réception supérieur (3) et du dispositif de réception inférieur (4) l'un par rapport à l'autre,
le sens de la rotation relative lors du serrage étant opposé au sens de la rotation relative lors de la libération.
